# EUROPEAN PATENT APPLICATION

(11) **EP 2 237 134 A1**
(43) Date of publication of application: **06.10.2010**
(21) Application number: 08862155.2
(22) Date of filing: 10.12.2008
(51) Int. Cl.: G06F 3/033, G06F 3/01

(54) **SPATIAL INPUT OPERATION DISPLAY APPARATUS**

(30) Priority: 18.12.2007 JP 2007325649
(71) Applicant: Panasonic Corporation, Kadoma-shi Osaka 571-8501 (JP)
(72) Inventor: YAMADA, Tomiyuki, Osaka-shi, Osaka 540-6207 (JP); TAKADA, Shuichi, Osaka-shi, Osaka 540-6207 (JP); IMAKI, Shunsaku, Osaka-shi, Osaka 540-6207 (JP)
(74) Representative: Grünecker, Kinkeldey, Stockmair & Schwanhäusser Anwaltssozietät
(86) International application number: PCT/JP2008/003695
(87) International publication number: WO 2009/078144

(57) **Abstract**

A spatial input operation display apparatus providing a user interface allowing input operations inside a space without requiring hands or fingers to be stopped in space, and not requiring a physical shape or space. The spatial input operation display apparatus is provided with a shape identifying portion (102) for recognizing shapes by comparing images obtained by a camera (101) with data stored in a shape data storing portion (103), an operation identifying portion (105) for identifying and anticipating motion patterns by comparing differential vector data of data identified by the shape identifying portion (102) with differential vector data stored in a motion data storing portion (106), a controller (107) for outputting image data based on motion pattern data of the operation identifying portion (105) and position data of an identified data storing portion (104), an image generating portion (108) for generating images by performing processes including rotation and expansion based on selected image data, and a display portion (109) for displaying the generated images to a space.

## Description

### Technical Field

The present invention relates to a spatial input motion display apparatus. More particularly, the present invention relates to a spatial input motion display apparatus that recognizes motions by analyzing captured images and displays motions based on recognition results.

### Background Art

Electronic devices such as a cellular phone and a computer are provided with an input means as a user interface, and users give commands or orders to electronic devices via input means. These input means are of great variety, and for example, keyboards, mice and touch panels are used as input means. These input means are optimally selected depending on characteristics of electronic devices. In particular, keyboard operation is still the mainstream interface today as regards its speed and accuracy although character input requires skill in particular. However, these input means require a certain space and therefore prevent reduction in the size and weight of electronic devices.

In view of above-described problem, for example, Patent Document 1 discloses an operating system selecting apparatus that projects a virtual image of an operation panel in a space in the vehicle interior using hologram and detects input operations by the user using this projected virtual operation panel.

In addition, an optical keyboard and so forth without a physical shape have been developed. This optical keyboard has a light source that emits light, a sensor that senses reflected wave from the object illuminated with light from the light source and a projector that projects a keyboard on a desk. The optical keyboard recognizes finger movements of the user operating the keyboard projected on the desk by means of a sensor, and detects input through the keyboard based on the movements.
Patent Document 1: Japanese Patent Application Laid-Open No.9-190278

### Disclosure of Invention

### Problems to be Solved by the Invention

However, the above-described conventional spatial input system has the following problem.

With the spatial input system described in Patent Document 1, when spatial operations are performed on the image by hologram, it is necessary to make hands or fingers immovable in midair unlike a case in which physical buttons are pressed, so that it is difficult to point out exact locations.

In addition, although a spatial input system using an optical keyboard has a feature that it does not have a physical shape when it is carried, the spatial input system requires a space such as a desk to project a keyboard on when it is used.

In view of the above-described problems, it is therefore an object of the present invention to provide a spatial input motion display apparatus to provide a user interface which allows input operations in space without making hands and fingers immovable in midair and which allows operations of electronic devices without requiring a physical shape and space.

### Means for Solving the Problem

The spatial input motion display apparatus according to the present invention adopts a configuration including: a camera; a shape data storing section that stores shape data in advance; a movement data storing section that stores movement data in advance; an image data storing section that stores image data in advance; a shape recognizing section that recognizes a shape of an object by comparing an image from the camera with the shape data stored in the shape data storing section, selects the shape data most similar to the shape of the object and outputs that differential data and positional information about whether or not the shape data is located in a predetermined position in the image; a recognition data storing section that stores the differential data in the shape recognizing section and the positional information; a motion recognizing section that recognizes or predicts a movement pattern by comparing the differential data stored in the recognition data storing section with the movement data stored in the movement data storing section; a control section that outputs image information about selection of the image to be generated, along with process information, including rotation, enlargement and reduction, based on the movement pattern information in the motion recognizing section and the positional information in the recognition data storing section; an image generating section that generates the image by selecting the image data stored in the image data storing section based on the image information and processing of the selected image data, including rotation and enlargement; and a display section that displays, in space, the image generated by the image generating section.

### Advantageous Effects of Invention

According to the present invention, it is possible to perform input operations in space without making fingers and hands immovable in midair, and it is possible to operate an electronic device and so forth, watching input operations in midair by a display apparatus without requiring a physical shape and space.

### Brief Description of Drawings

FIG.1 is a drawing showing a configuration of a spatial input motion display apparatus according to embodiment 1 of the present embodiment;
FIG.2 is a drawing showing an example of vector data of fingers by using the spatial input movement display device according to embodiment 1 ;
FIG.3 is a drawing showing an exemplary display in a case in which the shape object is masked in the spatial input motion display apparatus according to embodiment 3 of the present invention; and
FIG.4 is a drawing showing a display example of a virtual three-dimensional image of a spatial input motion display apparatus according to embodiment 5 of the present invention.

### Best Mode for Carrying Out the Invention

Now, embodiments of the present invention will be described in detail with reference to the accompanying drawings.

### (Embodiment 1)

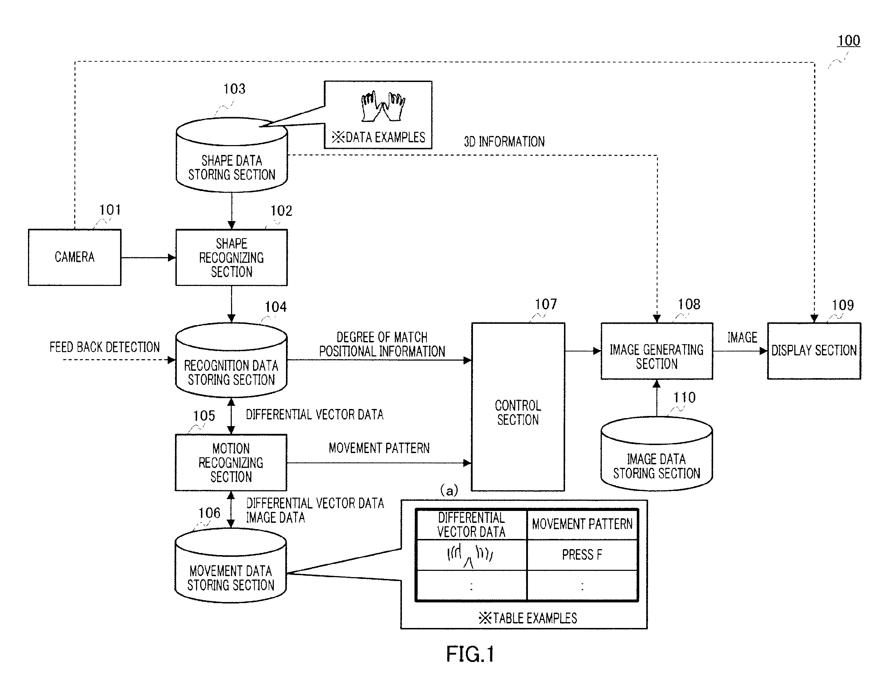

FIG.1 is a drawing showing a configuration of a spatial input motion display apparatus according to embodiment 1 of the present invention. The present embodiment is an example applied to a spatial input system suitable for use as an interface with the user of electronic devices such as a computer and an audio device.

In FIG.1, spatial input motion display apparatus 100 is configured by including camera 101, shape recognizing section 102, shape data storing section 103, recognition data storing section 104, motion recognizing section 105, movement data storing section 106, control section 107, image generating section 108, display section 109 and image data storing section 110.

Camera 101 is a means to receive images as input and sequentially sends images per frame.

Shape recognizing section 102 recognizes the shape of an object by comparing an image from camera 101 with shape data stored in shape data storing section 103. In addition, shape recognizing section 102 compares an image outputted from camera 101 with shape data in shape data storing section 103, selects the shape most similar to the shape data and then outputs the differential data and positional information about which position the selected shape is located in the image. Moreover, shape recognizing section 102 compares an image outputted from camera 101 with shape data and auxiliary data in shape data storing section 103, selects the shape most similar to the shape data, and then outputs the differential data and positional information about where the selected shape is located in the image.

Shape data storing section 103 stores shape data and auxiliary information such as color in advance.

Recognition data storing section 104 stores the differential data and positional information from shape recognizing section 102. To be more specific, recognition data storing section 104 accumulates the difference between the shape and the vector data of the shape data as differential vector data and accumulates positional information to point out where the shape is located in the image at the same time.

Motion recognizing section 105 compares the differential data stored in recognition data storing section 104 with movement data stored in movement data storing section 106 and recognizes and/or predicts movement patterns. For example, motion recognizing section 105 compares the differential data and movement data, selects N (N = any natural number) movement data in order from the most similar movement data, creates interpolation data based on the selected movement data and recognizes movement patterns by comparing the movement data and the interpolation data. In addition, motion recognizing section 105 compares the differential data with the movement data, selects the most similar movement data, writes it to recognition data storing section 104, reads previous recognition data from recognition data storing section 104 and creates an additional movement vector based on the difference between the present and previous data. Moreover, motion recognizing section 105 accumulates the comparison results in movement data storing section 106, orders movement data in accordance with the degree of match with the comparison results and searches movement data in the order.

Movement data storing section 106 stores registered movement data in advance.

Control section 107 outputs image information about selection of an image to be generated, along with process information, including rotation, enlargement and reduction, to image generating section 108 based on movement pattern information from motion recognizing section 105 and positional information from recognition data storing section 104.

Image generating section 108 selects image data stored in image data storing section 110 based on image information and generates an image by processing the selected image data, including rotation and enlargement.

Display section 109 displays in space the image generated by image generating section 108. In addition, display section 109 combines images outputted from camera 101 and images outputted from image generating section 108.

Image data storing section 110 stores image data in advance.

Here, as for spatial input motion display apparatus 100, another embodiment may be applicable that shape data storing section 103 previously stores auxiliary information including color in addition to shape data; shape recognizing section 102 compares images from camera 101 with shape data and auxiliary data in shape data storing section 103; and recognition data storing section 104 selects the most similar shape based on the recognition result in shape recognizing section 102 and stores the differential data and positional information about where the selected shape is located in the image.

Now, operations of spatial input motion display apparatus 100 configured as described above will be explained.

Shape recognizing section 102 receives an image outputted from camera 101 as input and detects, per frame, whether or not the inputted image has a registered shape using shape data prepared in shape data storing section 103. Detection methods fundamentally find correlation with registered shapes. There are various methods of calculating correlation. For example, the difference between the inputted image and the registered shape is calculated per pixel, and ,when the sum of their absolute values exceeds the threshold, it is possible to recognize the inputted image has a registered shape. Another recognition method may include detection based on only contour information by performing contour extraction and detection based on topology (the structure of a figure) by performing line thinning processing. Moreover, the proportion of colors in the detected shape may be taken into account, and results detected in earlier frames and results detected in times past may be used. The accuracy of detection is improved by, for example, combining them.

Rarely do shape data and detection results match fully.

In order to represent this difference, vector information representing shapes as shape vector sets is generated based on detection results. By creating vector data of shape data as auxiliary data, it is possible to indicate deformation from the shape data based on the difference between vector information and vector data of the shape data. This difference between vector data is newly accumulated in recognition data storing section 104 as differential vector data. Moreover, positional information to point out where the shape is located in the image is accumulated at the same time. Therefore, data recognized per frame is sequentially accumulated.

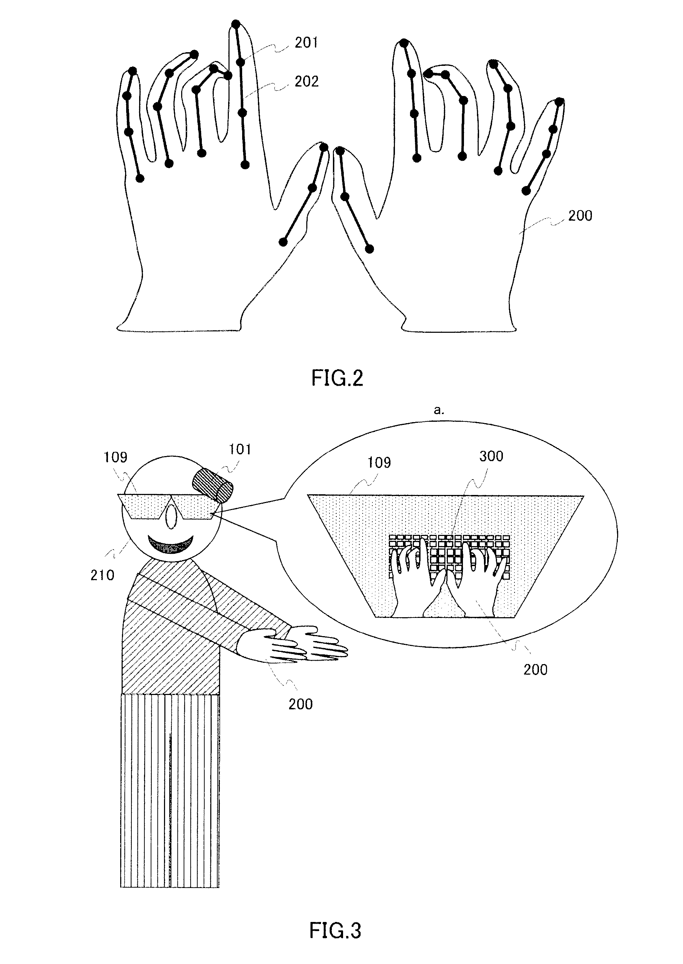

FIG.2 is a drawing showing an example of vector data of hands 200. In FIG.2, vector data is composed of lines 202 connecting between nodes (here, knuckle joints) 201 indicated by "•" symbols.

In addition it is possible to include depth information in the above-described positional information by determining the size of the shape. That is, it is possible to acquire three-dimensional positions from positional information and acquire the angle and state of the shape from differential vector data. Therefore, it is possible to obtain the same effect as object modeling in a 3D application, such as a game.

Motion recognizing section 105 detects motions using differential vector data in recognition data storing section 104. To be more specific, motion recognizing section 105 detects motions by comparison with movement data registered in data storing section 106 in advance. As shown in FIG.1A, movement data is tabulated based on movement patterns. Motion recognizing section 105 recognizes the corresponding motion pattern by comparison with differential vector data in recognition data storing section 104 and extracting the table having the highest degree of match.

Control section 107 receives, as input, the degree of match indicating that the desired shape is recognized and the relative coordinate, which are outputted from shape recognizing section 102, and movement patterns outputted from motion recognizing section 105 to control display. When the degree of match in shape recognition is low and in a case of the steady state, that is, when the differential vector data is the smallest in the movement pattern, control section 107 gives a command to generate fundamental image data to image generating section 108. Here, when the degree of match in shape recognition is low, some representation methods, including, for example, displaying nothing or creating semi-transparent image data, are possible. Moreover, control section 107 gives a command to output an image in accordance with the relative coordinate outputted from shape recognizing section 102 and movement patterns outputted from motion recognizing section 105.

Image generating section 108 generates an image using the given command and image data in image data storing section 110. The generated image is displayed per frame by display section 109.

As described above, the image varies per movement pattern and is outputted to display section 109. For example, movement data for a movement of fingers of hands is created in advance. A keyboard image for the movement is made into data at the same time in advance. Therefore, a keyboard image in conjunction with the movement of fingers appears. Normally, since part of keys varies in a keyboard, only an image corresponding to part of keys is changed from the keyboard image in the steady state based on the relative coordinate and movement patterns. For example, it is known from the relative coordinate that the index finger of the left hand is placed on the key position [F] shown in FIG.1A, and it is understood by the movement pattern that [F] is pushed.

As described above in detail, according to the present embodiment, spatial input motion display apparatus 100 has shape recognizing section 102 that recognizes the shape of objects by comparing images captured by camera 101 with data stored in shape data storing section 103; motion recognizing section 105 that recognizes and predicts movement patterns by comparing the differential vector data of the data recognized by shape recognizing section 102 with the differential vector data stored in movement data storing section 106; control section 107 that selects the image to be generated and outputs image information along with process information, including rotation, enlargement and reduction, based on movement pattern information from motion recognizing section 105 and positional information from recognition data storing section 104; image generating section 108 that generates images by selecting image data stored in image data storing section 110 based on image information and processing, including rotation and enlargement, the selected image data; and display section 109 that displays, in space, images generated by image generating section 108. By this means, it is possible to recognize a movement of hands in space and perform input operations in space without making hands and fingers immovable in midair. For example, virtual key input is allowed by recognizing the positions of buttons pressed on a keyboard. In addition, it is possible to operate an electronic device and so forth, watching input operations in midair by a display apparatus without requiring physical devices and spaces.

Moreover, with the present embodiment, motion recognizing section 105 selects N movement data in order from the most similar movement data by comparing the differential data with movement data, creates interpolation data from the selected movement data and recognizes movement patterns by comparing the movement data with interpolation data, so that it is possible to detect appropriate movements of operations by comparison with interpolation data even if movement patterns do not fully match movement data stored in advance.

In addition, with the present embodiment, motion recognizing section 105 selects the most similar movement data by comparing the differential data and movement data, writes it to recognition data storing section 104, reads previous recognition data from recognition data storing section 104 and creates an additional movement vector based on the difference between the present and previous data. By this means, even if the movement does not fully match movement data stored in advance, the generated additional vector is used in following comparisons, so that it is possible to show the same recognition result as in the previous time.

Moreover, with the present embodiment, display section 109 combines images from camera 101 and images from image generating section 108, so that it is possible to display a composite image resulting from combining an image viewed through the actual view point with an image of a keyboard and so forth generated in the image generating apparatus by, for example, fixing the mounting location of the camera on the head or part of eye glasses.

Moreover, the present embodiment has a configuration that: shape data storing section 103 previously stores auxiliary information including color in addition to shape data; shape recognizing section 102 compares images from camera 101 with shape data and auxiliary data in shape data storing section 103; and recognition data storing section 104 selects the most similar shape based on recognition results in shape recognizing section 102 and stores the differential data and positional information about where the selected shape is located in the image, so that it is possible to improve the accuracy of detection by comparison with auxiliary data even if it is difficult to detect shapes only using shape data stored in advance.

Moreover, the present embodiment has a configuration that recognizing section 105 accumulates comparison results in movement data storing section 106, orders movement data in accordance with the degree of match with the comparison results and searches movement data in order, so that comparison with motions of frequent operations is performed before processing, and therefore it is possible to improve the speed of detection and the accuracy of detection.

### (embodiment 2)

With embodiment 2, an example of an approach to improve the accuracy of detection will be explained.

With embodiment 2, shape recognizing section 102 has a configuration having criteria for shape recognition. It is possible to improve the accuracy of detection by providing criteria for shape recognizing section 102. For example, in order to detect hands, characteristics of hands of the operator may be registered. For example, a length or thickness of a finger and information of a finger ring are equivalent to characteristics.

In addition, if not only two-dimensional information but also three-dimensional information can be recognized based on inputted images, the accuracy of detection is further improved. It is possible to know the relative depth position from the scale in the size of a shape in order to recognize three-dimensional information. In addition, three-dimensional information can be often determined in advance by the shape of hands. For example, when a finger bends, the finger appears short in a image, so that it is possible to determine that the finger is bent. In addition, when a finger bends, the angle of bend can be ergonomically guessed to some extent, so that a database of three-dimensional information per knuckle is easily made. Moreover, it is possible to obtain relative coordinates from camera 101 as the origin, to fingers.

When there is a differential vector not fully matching movement data in movement data storing section 106, motion recognizing section 105 extracts two results with high degrees of match in detection, from movement data, and detects the transition of movement data based on the degree of match. For example, motion recognizing section 105 can detect that the movement from table 1 to table 4 or from table 4 to table 1 is made when the degree of match between table 1 and table 4 among movement data is high and approximately the same. Here, although an example is shown here where two results are extracted for detection, another configuration is applicable where three or four results are extracted for detection, and it is possible to perform detection in the same way in the case where two results are extracted. Here, in the case in which three or four results are extracted, process information of the data transition is gone into details.

### (Embodiment 3)

Embodiment 3 is an example of mask processing to display necessary parts in front.

With embodiment 3, image data storing section 110 has mask data together with image data; shape recognizing section 102 outputs shape data; image generating section 108 computes logical sum of parts belonging to shape data and mask data in image data storing section 110 and outputs the results as mask information; display section 109 displays an image in which pixels of the image outputted from the camera are assigned to be masked in accordance with the mask information from image generating section 108 and pixels outputted from image generating section 108 are assigned to be other than the masked pixels.

It assumes that display 109 is a transmissive display and allows the background to be seen through. Here, image generating section 108 may adjust image output positions so as to overlap with objects for shape recognition. In addition, it is possible to provide display corresponding to objects for shape recognition not only by adjusting image output positions but also by enlarging, reducing and deforming images. The above-described processing is incorporated in image generating section 108 and performed by, for example, a general-purpose graphics engine.

In this case, it is necessary to provide the relative relationship between display section 109 and the object for shape recognition as information in advance. It is necessary to make the distance between camera 101 and display section 109 zero, that is, camera 101 and display section 109 are required to be physically integrated, or their relative distance and relative angle are required to be fixed. Here, as for the latter, it is necessary to obtain information of the line of sight in display section 109.

In addition, when image data is directly displayed on display section 109, the displayed image covers the object for shape recognition. Here, if shape recognizing section 102 creates mask data to mask the object for shape recognition in order not to output the image of the masked pixels, the object for shape recognition is not covered.

FIG.3 is a drawing showing an exemplary display in a case in which the shape object is masked according to embodiment 3. The same components as in FIG.1 are assigned the same reference numerals.

Display 109, which is an overhead display, and camera 101 are mounted on head 210 in FIG.3. When display section 109 displays keyboard 300 on hands 200, movements of hands 200 are not seen, but it is possible to appear to place hands 200 on keyboard 300 by displaying keyboard 300 by masking hands 200 as shown in FIG.3a.

As described above, according to the present embodiment, it is possible to display necessary portions, such as hands, in front by masking the portions required to appear in front of the output from the image generating apparatus in image composition, so that it is possible to further improve operability.

### (Embodiment 4)

With embodiment 4, an example of an approach to improve the accuracy of detection by a learning function will be explained.

Embodiment 4 has a configuration that motion recognizing section 105 has a learning function in advance. It is possible to improve the accuracy of detection by providing a learning function for motion recognizing section 105 in advance. Motion recognizing section 105 automatically make a database by accumulating and adding motion patterns having been detected as correspondence with movement data in movement data storing section 106, and therefore allows estimation of the next motion from the database.

For example, as described with embodiment 2, in a case in which there is a differential vector, which does not fully match movement data, when movements are detected from two or more tables, these series of movements are learned and stored, so that it is possible to obtain a similar detection result when the same movement is recognized next, and therefore the accuracy of detection can be improved.

In addition, a new input operation in a certain movement pattern is allowed by extending this function and learning the movement pattern in advance.

Moreover, it may be possible to reliably feed back results by the user's decision about displayed results.

### (Embodiment 5)

Embodiment 5 is an example of application of 3D graphics display.

With embodiment 5, shape data storing section 103 stores 3D graphics display information including 3D modeling coordinates and texture images of shapes in addition to shape data, and image generating section 108 obtains 3D graphics display information according to shape data outputted from control section 107 and generates and combines a 3D images.

Generation of 3D images using image generating section 108 is allowed by storing 3D data as auxiliary data in addition to shape data in shape data storing section 103. When display section 109 is a transmissive display and enables display of different images between right and left sides, it is possible to display 3D images in space. In addition, it is also possible to make display section 109 display a virtual 3D image at a different view point from the view point of the actual camera position. The above-described processing may be incorporated in image generating section 108 and performed by a general-purpose graphics engine.

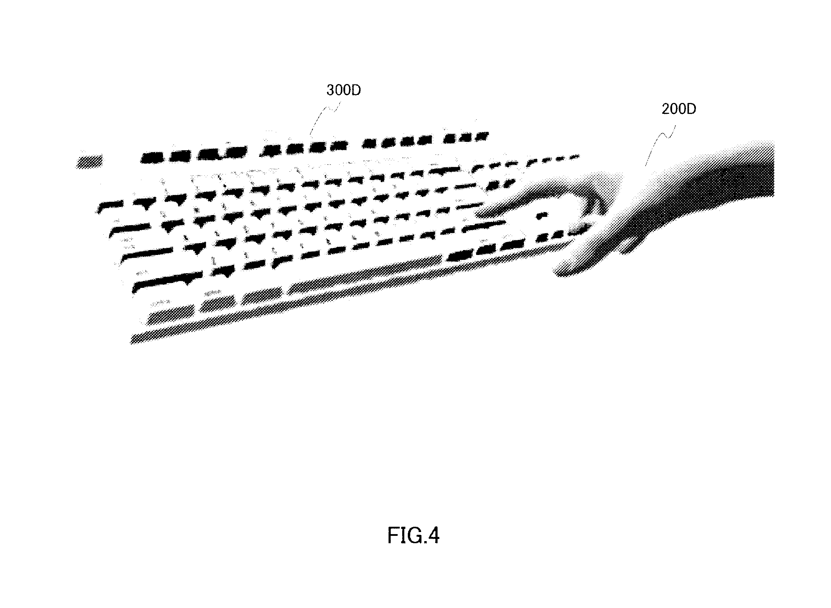

FIG.4 is a drawing showing an exemplary display of a virtual three-dimensional image.

As shown in FIG.4, it is possible to make display section 109 virtually display three-dimensional keyboard 300D and hand 200D. According to this configuration, it is possible to display a keyboard and hands in three dimensions in different positions from the actual view point, and it is possible to recognize them in really invisible positions, which enables easy operation.

As described above, the present embodiment allows recognition in positions hidden from the actual view point, so that it is possible to more improve operability.

### (Embodiment 6)

Embodiment 6 is an example of providing speech output in addition.

With embodiment 6, a speech generating apparatus (not shown) configured by a speech synthesis LSI is provided in addition. Control section 107 outputs selection information of speech to be generated to the speech generating apparatus based on selection information about movement data from motion recognizing section 105 and positional information from recognition data storing section 104. The speech generating apparatus plays back selected speech.

Image generating section 108 is provided with a built-in 2D/3D graphics engine, generates images in accordance with commands given from this 2D/3D graphics engine and outputs the results corresponding to input operations to display section 109. In addition, control section 107 outputs the results corresponding to input operations as speech and so forth. In this case, a speaker, for example, may be built in control section 107. By this means, it is possible to improve the stability in input operations by feeding input states back to the user.

For example, in a case where the keyboard image is displayed on display section 109 as shown in FIG.3 and FIG.4, when a command indicating that, for example, key [F] has been pressed, is issued, image generating section 108 generates image data to light the indication of key [F]. By this means, it is possible to visually recognize input operations, and in addition, it is possible to acoustically recognize input operations by control section 107. Therefore, the user can perceptually recognize that the key has been pressed although the key has not been pressed actually.

As described above, according to the present embodiment, it is possible to acoustically recognize that a key has been pressed, and it is possible to more improve the stability in key input operations.

The above descriptions are illustrations of preferred embodiments of the present invention and the scope of the invention is not limited to these. For example, although each above-described embodiment is an example applied to various electronic devices, it is possible to apply to any devices as far as it is possible to display objects to be input in space.

In addition, although the name "spatial input motion display apparatus" is adopted in each above-described embodiment for convenience of explanation, the name naturally may be "spatial input system", "spatial input apparatus and so forth.

Moreover, the type, the number, the connection method and so forth of each component constituting the above-described spatial input motion display apparatus, for example, a data storing section, are not limited to the above-described embodiments.

The disclosure of Japanese Patent Application No.2007-325649, filed on December 18, 2007, including the specification, drawings and abstract, is incorporated herein by reference in its entirety.

### Industrial Applicability

The spatial input motion display apparatus according to the present invention allows operations of an electronic device and so forth, watching input operations in midair by a display apparatus without requiring a physical shape and space. Therefore, spatial input motion display apparatus according to the present invention is not only appropriate to application to spatial input systems in various electronic devices, but also it is possible to be widely applied to spatial input systems in various devices (e.g. illumination products in vehicles) other than electronic devices.

## Claims

1. A spatial input motion display apparatus comprising:
a camera;
a shape data storing section that stores shape data in advance;
a movement data storing section that stores movement data in advance;
an image data storing section that stores image data in advance;
a shape recognizing section that recognizes a shape of an object by comparing an image from the camera with the shape data stored in the shape data storing section, selects the shape data most similar to the shape of the object and outputs that differential data and positional information about whether or not the shape data is located in a predetermined position in the image;
a recognition data storing section that stores the differential data in the shape recognizing section and the positional information;
a motion recognizing section that recognizes or predicts a movement pattern by comparing the differential data stored in the recognition data storing section with the movement data stored in the movement data storing section;
a control section that outputs image information about selection of the image to be generated, along with process information, including rotation, enlargement and reduction, based on the movement pattern information in the motion recognizing section and the positional information in the recognition data storing section;
an image generating section that generates the image by selecting the image data stored in the image data storing section based on the image information and processing of the selected image data, including rotation and enlargement; and
a display section that displays, in space, the image generated by the image generating section.

2. The spatial input motion display apparatus according to claim 1, wherein the motion recognizing section selects N (N = any natural number) movement data in order from the most similar movement data by comparing the differential data with the movement data, creates interpolation data based on the selected movement data and recognizes the movement pattern by comparing the movement data with the interpolation data.

3. The spatial input motion display apparatus according to claim 1, wherein the motion recognizing section selects the most similar movement data by comparing the differential data with the movement data, writes the most similar movement data in the recognition data storing section, reads previous recognition data from the recognition data storing section and generates an additional movement vector based on a difference between present and previous data.

4. The spatial input motion display apparatus according to claim 1, wherein the display section combines the image from the camera and the image in the image generating section.

5. The spatial input motion display apparatus according to claim 1, wherein:
the image data storing section has mask data together with the image data;
the shape recognizing section outputs the shape data;
the image generating section computes logical sum of a part belonging to the shape data and the mask data in the image data storing section and outputs a result as mask information; and
the display section displays the image in which pixels of the image outputted from the camera are assigned to be masked in accordance with the mask information from image generating section and pixels outputted from the image generating section are assigned as the other pixels.

6. The spatial input motion display apparatus according to claim 1, wherein:
the shape data storing section stores auxiliary information including color in advance in addition to the shape data;
the shape recognizing section compares the image from the camera with the shape data and auxiliary data in the shape data storing section; and
the recognition data storing section selects a most similar shape based on a recognition result in the shape recognizing section and stores the differential data and positional information about where the shape data is located in the image.

7. The spatial input motion display apparatus according to claim 1, wherein the motion recognizing section accumulates comparison results in movement data storing section, orders the movement data in accordance with a degree of match with the comparison results and searches the movement data in a order.

8. The spatial input motion display apparatus according to claim 1, wherein:
the shape data storing section previously stores three-dimensional graphics display information including a three-dimensional modeling coordinate and a texture image of the shape in addition to the shape data; and
the image generating section acquires the three-dimensional graphics display information, generates and combines three-dimensional images.

9. The spatial input motion apparatus according to claim 1, further comprising a speech generating section that plays back speech, wherein:
the control section outputs selection information about speech to be generated to the speech generating section based on selection information of the movement data from the motion recognizing section and the positional information from the recognition data storing section; and
the speech generating section plays back selected speech.
